# EUROPÄISCHE PATENTANMELDUNG

(11) **EP 0 597 314 A1**
(43) Veröffentlichungstag der Anmeldung: **18.05.1994**
(21) Anmeldenummer: 93117319.9
(22) Anmeldetag: 26.10.1993
(51) Int. Cl.: B65D 51/00

(54) **Selbstschliessender Kraftstoffbehälterverschluss**

(30) Priorität: 09.11.1992 DE 4237790
(71) Anmelder: Temtec Fahrzeugtechnik Entwicklungsgesellschaft mbH, D-83064 Raubling (DE)
(72) Erfinder: Kunz, Georg, Dipl.-Ing. (FH), D-83024 Rosenheim (DE); Temmesfeld, Angelika Barbara Maria, D-83064 Raubling (DE)
(74) Vertreter: Kehl, Günther, Dipl.-Phys.

(57) **Zusammenfassung**

Selbstschließender Behälterverschluß zur Befestigung auf einem Einfüllstutzen, mit einer in Richtung auf einen Dichtsitz (2) vorgespannten, in Richtung auf das Innere des Einfüllstutzens (1) um eine Drehachse (3) verschwenkbaren Verschlußklappe (4). Um das Einführen von Zapfpistolen zu ermöglichen, die mit einer Saugdüse für Dämpfe ausgestattet sind, ist vorgesehen, daß die Verschlußklappe aus biegbarem Material gefertigt ist und/oder eine gekrümmte Form aufweist.

## Beschreibung

Die Erfindung bezieht sich auf einen selbstschließenden Behälterverschluß zur Befestigung auf einem Einfüllstutzen, mit einer in Richtung auf einen Dichtsitz vorgespannten, in Richtung auf das Innere des Einfüllstutzen um eine Drehachse verschwenkbaren Verschlußklappe.

Ein Behälterverschluß dieser Art ist aus der DE-A-37 21 049.1 bekannt. Bei selbstschließenden Behälterverschlüssen dieser Art, die nach Art eines Tankdeckels in einen Einfüllstutzen eines Kraftfahrzeuges geschraubt oder dort mittels eines Bajonettverschlusses befestigt werden können, ist die Einführung einer modernen, mit einer Absaugvorrichtung versehenen Zapfpistole schwierig, da der vorhandene Platz einerseits durch den Durchmesser des genormten Einfüllstutzen bestimmt ist und andererseits die geöffnete Klappe des Behälterverschlusses einen beträchtlichen Teil des Kanals der zur Einführung der Zapfpistole bestimmt ist, belegt.

Der Erfindung liegt die Aufgabe zugrunde, einen Behälterverschluß der eingangs genannten Art zu schaffen, der so klein baut, daß bei geöffneter Klappe eine lichte Weite zur Verfügung steht, die die Einführung einer Zapfpistole mit einer Saugdüse für Behälterdämpfe ermöglicht.

Diese Aufgabe ist dadurch gelöst, daß die Verschlußklappe aus biegbarem Material gefertigt ist und/oder eine gekrümmte Form aufweist.

Durch die erfindungsgemäße Verschlußklappe, die biegbar oder gebogen ist, wird erreicht, daß sich die Verschlußklappe in ihrer Offenstellung an die Rundung des Einführkanals des Behälterverschlusses anschmiegt und infolgedessen eine vollständige oder nahezu vollständige Öffnung der Verschlußklappe ermöglicht und das den Einführkanal bildende Innenrohr des Behälterverschlusses nahezu vollständig zur Einführung einer Zapfpistole freigibt.

Gemäß einer vorteilhaften Ausführungsform der Erfindung ist die Verschlußklappe aus einem Federstahlblech gefertigt. Wird bei dieser Ausführungsform die Verschlußklappe durch Einführen der Zapfpistole aus ihrem Dichtsitz gedrückt und in ihre Offenstellung verschwenkt, so biegt sich das Federstahlblech von selbst in einer solchen Weise, daß es den Radius des Innenrohrs des Behälterverschlusses annimmt. Aufgrund der Elastizität des Federstahlbleches federt dieses nach dem Schließen der Verschlußklappe wieder in seine flache Form zurück, sodaß es dicht an dem Dichtsitz anliegt.

Nach einer anderen Ausführungsform der Erfindung ist vorgesehen, daß die Verschlußklappe dauerhaft derart gebogen ist, daß sie in einer Schnittebene parallel zur Drehachse die Form eines Kreisbogens aufweist. Bei einer solchen Ausführungsform muß beim Öffnen der Verschlußklappe keine Verbiegungsarbeit geleistet werden. Vielmehr behält die Verschlußklappe dauernd eine solche Form, die gewährleistet, daß sie sich im geöffneten Zustand dicht an die Wandung des Innenrohres des Behälterverschlusses anschmiegt.

Nach einer vorteilhaften Ausführungsform der Erfindung ist die Verschlußklappe mit einem Überdruckventil versehen, das bei dem Entstehen eines übergroßen Innendruckes in dem Behälter öffnet und die Gase nach außen ableitet, um die Gefahr einer Explosion zu vermeiden.

Nach einer vorteilhaften Weiterbildung eines solchen Behälterverschlusses ist vorgesehen, daß das Überdruckventil einen Auslösehebel aufweist, der durch den Mündungsrand der Zapfpistole betätigbar ist. Wenn sich daher die Zapfpistole dem Behälterverschluß zum Zwecke des Betankens nähert, berührt diese zuerst den Auslösehebel, sodaß das Ventil öffnet und der Innendruck des Behälters sich langsam abbaut. Da bei einer Zapfpistole, die mit einer Absaugung versehen ist, in diesem Fall die Absaugung bereits in Betrieb sein kann, können die aus dem Behälter entweichenden Dämpfe umweltfreundlich über das Absaugsystem beseitigt werden.

Nach einer weiteren vorteilhaften Ausführungsform, bei der der Dichtsitz in Bezug auf die Querschnittsebene des Einfüllstutzens geneigt angeordnet ist, kann von dem im Mündungsbereich des Einfüllstutzens zur Verfügung stehenden Raum optimal Gebrauch gemacht werden.

Nach einer erfinderischen Weiterentwicklung des Behälterverschlusses ist eine Sperreinrichtung vorgesehen, die das vollständige Öffnen der Klappe bei innenseitigem Überdruck verhindert. Bei dieser Ausführungsform wird sichergestellt, daß die unter Druck stehenden Behälterdämpfe, die sich beispielsweise in der warmen Jahreszeit während des Betriebs des Fahrzeuges angesammelt haben, langsam vor dem Öffnen der Klappe entweichen und somit vollständig von der Absaugeinrichtung aufgesogen und beseitigt werden können. Bei einem plötzlichen vollständigen Öffnen der Klappe könnten die unter Druck entweichenden Dämpfe nicht vollständig aufgesogen werden und würden eventuell die Person gefährden, die das Fahrzeug betankt.

In weiterer vorteilhaften Ausgestaltung der Erfindung ist die Sperreinrichtung ein druckempfindliches bewegliches Teil, das mit einer Seite mit der Außenluft und mit seiner entgegengesetzten Seite mit dem Innenraum des Einfüllstutzen in Verbindung steht, wobei an das bewegliche Teil ein Sperrriegel gekoppelt ist, der die Öffnung der Klappe in der einen Stellung des beweglichen Teils verhindert und in der anderen Stellung freigibt.

Vorzugsweise besteht der Sperrriegel aus einem Ring, der den Dichtsitz umschließt und der parallel zur Ebene des Dichtsitzes verschiebbar ist.

An diesem Ring ist des weiteren ein in den Öffnungsweg der Verschlußklappe ein greifender Haken angeordnet.

Weitere vorteilhafte Ausführungsformen der Erfindung sind den Unteransprüchen zu entnehmen. Die Erfindung wird nachfolgend an Hand zweier in den Figuren schematisch dargestellter Ausführungsbeispiele näher erläutert. Es zeigt:
Figur 1: einen Kraftstoffbehälterverschluß gemäß der Erfindung im Längsschnitt;
Figur 2: den Krattstoffbehälterverschluß gemäß Figur 1 in der Draufsicht;
Figur 3: den Kraftstoffbehälterverschluß gemäß Figur 1 bei geöffneter Verschlußklappe;
Figur 4: einen Schnitt längs der Schnittlinie IV-IV in Figur 3;
Figur 5: einen Längsschnitt eines Kraftstoffbehälterverschlusses mit einer dauerhaft vorgebogenen Verschlußklappe.

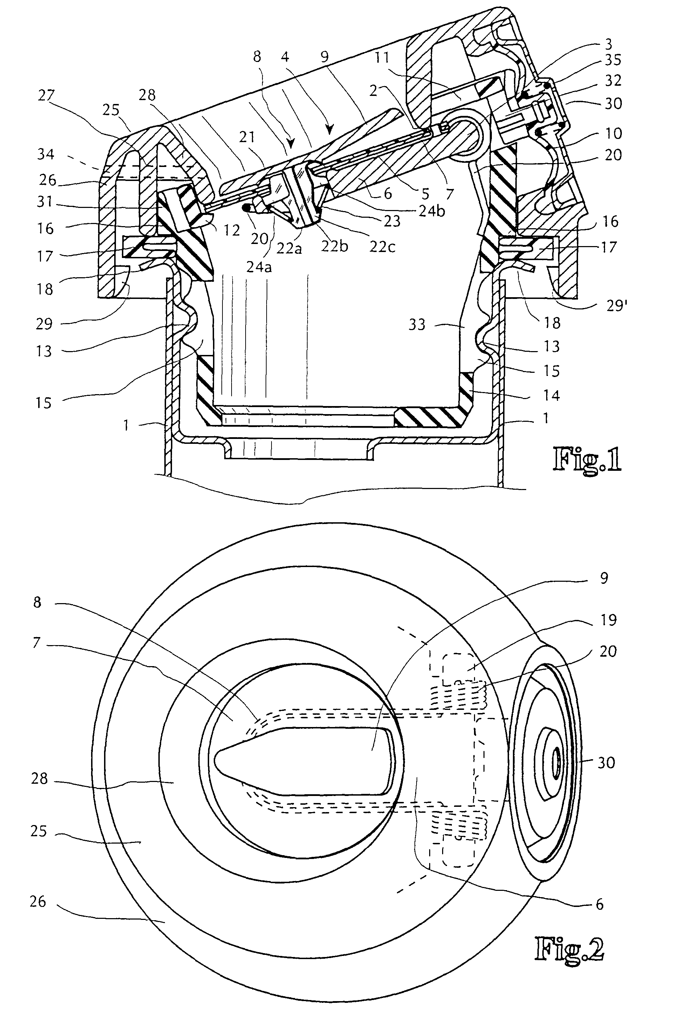

In Figur ist das Mündungsende eines Kraftstoffeinfüllstutzens 1 eines Kraftfahrzeuges dargestellt. Der Kraftstoffeinfüllstutzen weist ein Innengewinde 13 auf, das üblicherweise zur Aufnahme eines Tankdeckels dient. Anstelle des sonst üblichen Tankdeckels ist bei der Darstellung der Figur 1 ein selbstschließender Kraftstoffbehälterverschluß gemäß der Erfindung in die Mündungsöffnung des Einfüllstutzens 1 geschraubt. Der Kraftstoffbehälterverschluß weist ein aus Kunststoff bestehendes Innenrohr 14 auf, das mit einem zu dem Gewinde 13 passenden Außengewinde 15 versehen ist. Das Innenrohr 14 bildet den Einführungskanal für die Zapfpistole. Das Innenrohr 14 weist einen solchen Außendurchmesser auf, daß es von einem üblichen, genormten Einfüllstutzen aufgenommen werden kann. In seinem am Ende des Einfüllstutzen gelegenen Teil ist es jedoch nach außen verbreitert und weist eine Ringschulter 16 auf, die sich unter Zwischenschaltung einer Dichtung 17 auf dem Mündungsrand 18 des Kraffstoffeinfüllstutzens 1 abstützt. Das Innenrohr 14 ist an seinem aus dem Kraftstoffeinfüllstutzen herausragenden Ende schräg angeschnitten, sodaß es eine Seite aufweist, die aus dem Kraftstoffeinfüllstutzen weiter vorsteht als die andere Seite. An dieser weiter aus dem Einfüllstutzen vorstehenden Seite sind in dem Innenrohr 14 zwei sich gegenüberliegende U-förmige Ausnehmungen vorhanden (in der Zeichnung nicht zu erkennen), in denen ein Zapfen 19 ruht, der auf diese Weise eine Drehachse 3 darstellt. Mit dem Zapfen 19 ist ein Tragarm 6 verbunden, der eine Verschlußklappe 4 trägt, die weiter unten beschrieben wird. Um den Zapfen 19 ist eine Torsionsfeder 20 gewunden, die sich einerseits an dem Tragarm 6 und andererseits an der Innenwandung des Innenrohres 14 abstützt, sodaß auf den Tragarm 6 ein Drehmoment ausgeübt wird. Auf dem Tragarm 6 ist eine Verschlußklappe 4 bestehend aus einem Federstahlblech 5 und einer auf dem Federstahlblech angeordneten elastischen Dichtung 7 befestigt.

Die aus dem Federstahlblech 5 und der elastischen Dichtung 7 bestehende Verschlußklappe 4 sowie der die Verschlußklappe tragende Tragarm 6 sind zur Aufnahme eines Überdruckventiles 8 durchbohrt.

Das Überdruckventil 8 besteht aus einem Ventilkörper 21, der mit einem Dichtungsrand sich auf der elastischen Dichtung 7 abstützt. An der der elastischen Dichtung zugewandten Seite des Ventilkörpers 21 ist ein zapfenförmiger Körper 22 angeordnet, der aus vier um 90 versetzten Rippen besteht, von denen in Figur 1 die Rippen 22a, 22b und 22c zu erkennen sind. Der aus den Rippen bestehende zapfenförmige Körper 22 durchragt die Öffnung in der elastischen Dichtung 7 und dem Federstahlblatt 5 sowie die entsprechende Bohrung in dem Tragarm 6. Die Rippen 22a, 22b und 22c sind so geformt, daß sie eine Anschlagschulter für eine konische Feder 23 bilden, die sich mit ihrem anderen Ende an einer entsprechenden Anschlagschulter des Tragarms 6 abstützt. An dem Tragarm 6 sind vier Rippen angeordnet, von denen in der Zeichnung zwei, nämlich die Rippen mit den Bezugszeichen 24a und 24b zu sehen sind. Die Rippen 24a, 24b sowie die nicht dargestellten beiden weiteren Rippen ragen in die Zwischenräume zwischen den Rippen 22a, 22b und 22c hinein, sodaß der zapfenförmige an dem Ventilkörper 21 befestigte Körper 22 drehfest, jedoch längsverschieblich gelagert ist.

Durch die Wirkung der Feder 23 wird der Ventilkörper 21 fest gegen die Dichtung 7 gepreßt, sodaß die Bohrung in der Dichtung verschlossen ist. Sobald jedoch auf der Innenseite ein Überdruck lastet, der in der Lage ist, den aus den Rippen 22a, 22b, 22c und 22d bestehenden zapfenförmigen Körper 22 anzuheben, wird die dichte Verbindung zwischen dem Ventilkörper 21 und der elastischen Dichtung 7 aufgehoben und Dämpfe aus dem Innenraum können abströmen.

Da das Überdruckventil 8 einen Auslösearm 9 aufweist, der von der Dichtfläche 7 absteht, kann das Überdruckventil auch dadurch geöffnet werden, daß der Auslösearm 9 in Richtung auf die Dichtung 7 gedrückt wird, wodurch sich der Ventilkörper verkantet und die Öffnung zum Innenraum an der Seite freigibt, die dem Auslösearm 9 gegenüberliegt. Eine solche Auslösung ist insbesondere durch Anstoßen einer Zapfpistole an dem Auslösearm 9 möglich.

Das aus dem Einfüllstutzen vorstehende Ende des Innenrohrs 14 ist von einer Abschlußkappe 25 umgeben. Diese besteht aus einem umlaufenden Außenmantel 26, aus einem inneren Steg 27 und einem innenliegenden Einführtrichter 28. Durch eine Radialbohrung 34 kann beispielsweise Wasser, das sich vor der geschlossenen Klappe ansammeln würde, abgeleitet werden. Der umlaufende Steg 27 stützt sich unter Zwischenschaltung der Dichtung 17 auf dem Mündungsrand 18 des Kraftstoffeinfüllstutzens ab. Auf diese Weise ergibt sich eine dichte Verbindung zwischen der Abschlußkappe 25 und dem Kraftstoffeinfüllstutzen 1.

Das zu dem Kraftstoffeinfüllstutzen weisende Ende des Einführtrichters 28 stellt den Anschlag und somit den Dichtsitz 2 für die Verschlußklappe 4 dar. Am Außenmantel 26 sind Rippen 29 befestigt, durch die die Dichtung 17 in der gezeigten Position auch dann gehalten wird, wenn der Kraffstoffbehälterverschluß von dem Einfüllstutzen entfernt ist.

Die Abschlußkappe 25 ist an die schräg geschnittene Form des Innenrohres 14 angepaßt. An der Seite, an der das Innenrohr 14 länger ist und an der der Zapfen 19 für den Tragarm 6 angeordnet ist, ist in der Abschlußkappe 25 ein Hohlraum vorgesehen, in dem ein bewegliches Teil, nämlich eine elastische Membran 10 angeordnet ist, die durch eine Feder 35 belastet ist. Der Außenmantel 26 der Abschlußkappe 25 ist mit einem Loch 30 durchbrochen, sodaß die sich in dem Hohlraum befindende Membran 10 an dieser Seite dem Außenluftdruck ausgesetzt ist. An der Innenseite der Membran 10 liegt der Innendruck aus dem Kraftstoffbehälter an. Je nach Größe des Innendruckes verschiebt sich die Membran 10 in die Richtung auf das Loch 30 oder von diesem weg. Das Innenrohr 14 ist an seinem nach außen weisenden Ende mit einer Innenschulter 31 versehen, in der der Ring 11 angeordnet ist. Die Innenschulter 31, und der Ring 11 sind so dimensioniert, daß der Ring 11 in Richtung des Tragarmes 6 verschieblich ist. In der Richtung senkrecht hierzu wird er jedoch durch die Innenschulter 31 des Innenrohres 14 mit wenig Spiel geführt. Die Mitte der Membran 10 ist über einen Bügel 32 mit dem Ring 11 verbunden, sodaß die Bewegung der Membran auf den Ring 11 übertragen wird. An dem Ring 11 ist an seinem von der Drehachse 3 abgelegenen Ende ein Haken 12 angeordnet, der die aus dem Federstahlblech 5 und der Dichtung 7 bestehende Verschlußklappe 4 dann hintergreift, wenn - wie in Figur 1 gezeigt - sich der verschiebbare Ring 11 in seiner rechten Anschlagposition befindet. Dies ist dann der Fall, wenn der Innendruck in dem Kraftstoffbehälter und somit an der Membran 10 ausreichend ist, um die Membran 10 radial nach außen zu schieben. Durch den Haken 12, wird dann das Öffnen der Verschlußklappe 4 verhindert.

Wenn jedoch die Person, die das Fahrzeug betanken will, versucht, die Klappe zu öffnen, drückt sie mit der Zapfpistole gegen den Auslösehebel 9, sodaß sich das Überdruckventil 8 öffnet und die Kraftstoffdämpfe aus dem Inneren des Kraftstoffbehälters entweichen können. Diese können dann bei einer mit einer Saugdüse ausgerüsteten Zapfpistole aufgesaugt werden. Dies ist möglich, da die Kraftstoffdämpfe nur langsam entweichen. In dem Maße, in dem der Innendruck abgebaut wird, bewegt sich die elastische Membran 10 infolge der Wirkung der Feder 35 radial nach innen, d.h. in Richtung auf die Verschlußklappe (in der Zeichnung nach links). Da der Ring 11 wegen seiner Kopplung an die Membran 10 diese Bewegung mitmacht, wird der an dem Ring 11 angeordnete Haken 12 in entsprechender Weise bewegt, sodaß die Verschlußklappe freigegeben und mit der Zapfpistole aufgestoßen werden kann.

Figur 2 zeigt den Kraftstoffbehälterverschluß in einer Ansicht von oben. Es ist insbesondere die Abschlußkappe 25 mit ihrem Außenmantel 26 mit der Belüftungsöffnung 30 für die Membran 10 zu erkennen. In der Draufsicht ist ebenfalls der Einführtrichter 28 für die Zapfpistole zu sehen, der an seinem unteren Ende durch die mit der Dichtung 7 belegte Verschlußklappe verschlossen ist. Gut zu sehen ist ebenfalls der Auslösehebel 9 des Überdruckventils 8. Der Lagerzapfen 19 sowie der an diesem angeordnete Tragarm 6 und die um den Lagerzapfen 19 gewundene Torsionsfeder 20 sind bei der Darstellung der Figur 2 durch die Abschlußkappe 25 verdeckt, weswegen sie strichliert eingezeichnet sind.

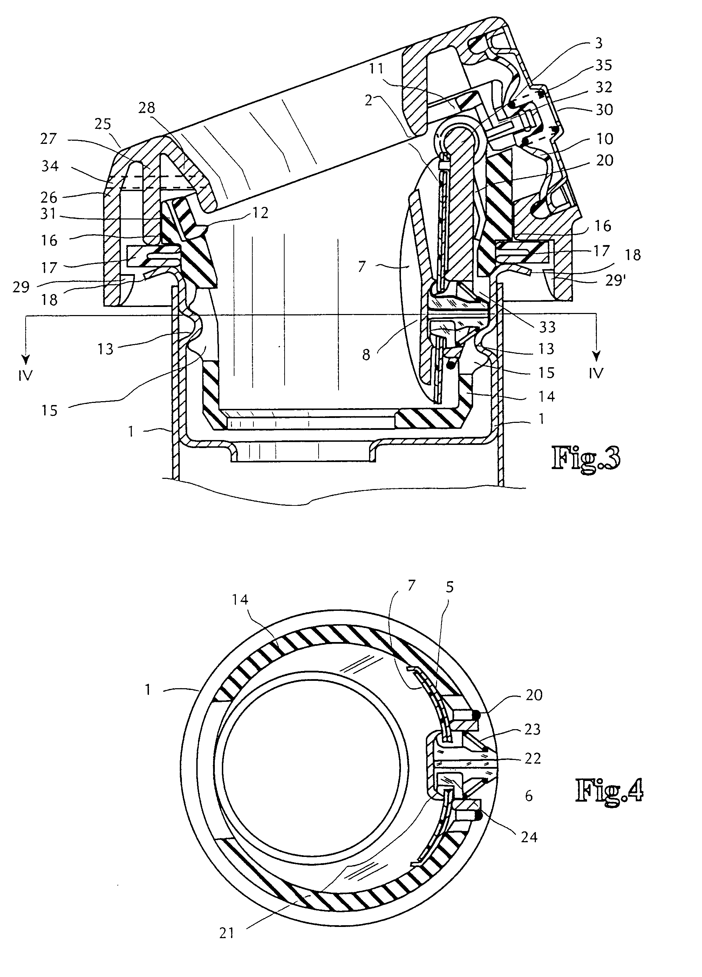

Figur 3 zeigt den Schnitt durch denselben Kraftstoffbehälterverschluß wie Figur 1, jedoch bei geöffneter Verschlußklappe. Wie aus einem Vergleich der Figuren 1 und 3 hervorgeht, liegt die Membran 10 näher beim Zentrum als in Figur 1. Dies ist darauf zurückzuführen, daß der Druck an der Innenseite nach Öffnen des Ventiles und der Klappe abgefallen ist. Dementsprechend haben sich der Ring 11 sowie der Haken 12 verschoben, derart, daß der Haken 12 den Öffnungsweg für die Verschlußklappe 4 freigegeben hat.

Da die Verschlußklappe 4 aus elastisch biegbaren Teilen, nämlich dem Federstahlblech 5 und der Dichtung 7 besteht, haben sich diese Teile infolge der Öffnungsbewegung der Klappe 4 in Anpassung an die Rundung des Innenrohres verformt. Dies ermöglicht die nahezu vollständige Zurückbewegung der Verschlußklappe aus dem Einführkanal für die Zapfpistole. Die Weite der Öffnungsbewegung wird noch dadurch vergrößert, daß das Innenrohr 14 an der Stelle, an der sich die geöffnete Verschlußklappe 4 befindet eine Ausnehmung 33 aufweist, in die der Tragarm und das Überdruckventil 8 (soweit es über den Tragarm vorsteht) eingefügt werden können.

Die elastische Verformung der Verschlußklappe 4 ist besonders deutlich in dem Schnitt der Figur 4 zu erkennen. Das Federstahlblech 5 ist an seinen beiden zu den beiden Seiten des Tragarmes 6 gelegenen Kanten abgerundet, damit es dort mit möglichst geringer Reibung an der Wandung des Innenrohres 14 gleiten kann. Wie in Figur 4 ebenfalls sehr deutlich zu erkennen ist, kann die Verschlußklappe 4 soweit geöffnet werden, bis deren Teile an der Innenwandung des Kraftstoffeinfüllstutzens anschlagen.

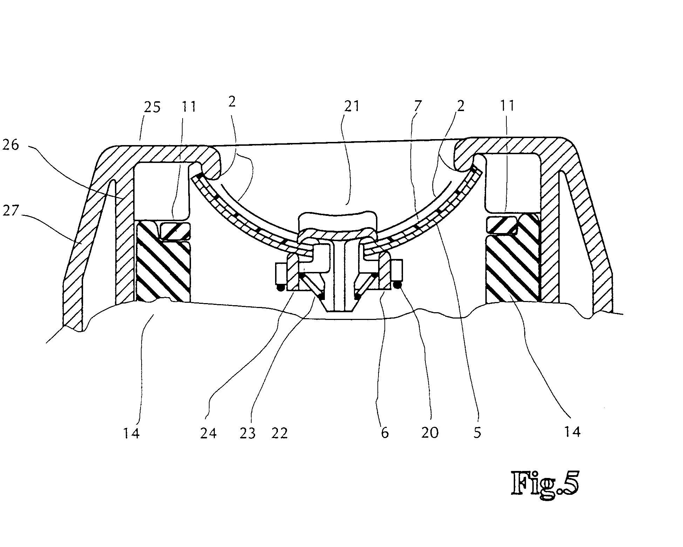

Figur 5 zeigt eine Ausführungsform der Erfindung, bei der anstelle einer verformbaren Verschlußklappe eine halbkreisförmig vorgeformte Verschlußklappe vorgesehen ist. Anstelle eines elastisch verformbaren Federstahlbleches besteht die Verschlußklappe aus einem vorgeformten Teil 5, das mit einer Dichtung 7 belegt ist. Die Schnittebene in Figur 5 ist senkrecht zur Längsachse des Tragarmes 6 gewählt.

Bei dieser Ausführungsform muß beim Öffnen der Verschlußklappe diese nicht verformt werden, sodaß keine zusätzlichen Kräfte aufgebracht werden müssen. Allerdings muß der Ventilsitz 2 sattelförmig an die Form der Verschlußklappe angepaßt sein, um einen dichten Sitz zu erreichen.

Da die sonstigen Teile des Kraftstoffbehälterverschlusses gemäß Figur 5 identisch sind zu denen des an Hand der Figuren 1 bis 4 erläuterten Kraftstoffbehälterverschlusses, wurde von einer nochmaligen Darstellung abgesehen.

## Patentansprüche

1. Selbstschließender Behälterverschluß zur Befestigung auf einem Einfüllstutzen (1) mit einer in Richtung auf einen Dichtsitz (2) vorgespannten, in Richtung auf das Innere des Einfüllstutzen um eine Drehachse (3) verschwenkbaren Verschlußklappe (4), dadurch gekennzeichnet, daß die Verschlußklappe (4) aus biegbarem Material gefertigt ist und/oder eine gekrümmte Form aufweist.

2. Behälterverschluß nach Anspruch 1, dadurch gekennzeichnet, daß die Verschlußklappe (4) ein Federstahlblech (5) aufweist.

3. Behälterverschluß nach Anspruch 1, dadurch gekennzeichnet, daß die Verschlußklappe (4) dauerhaft derart gebogen ist, daß sie in einer Schnittebene parallel zur Drehachse etwa die Form eines Kreisbogens aufweist (Figur 5).

4. Behälterverschluß nach Anspruch 3, dadurch gekennzeichnet, daß der Dichtsitz (2) in Anpassung an die gebogene Verschlußklappe (4) ausgeformt ist (Figur 5).

5. Behälterverschluß nach einem der vorhergehenden Ansprüche, dadurch gekennzeichnet, daß die Verschlußklappe (4) von einem Tragarm (6) getragen ist.

6. Behälterverschluß nach einem der vorhergehenden Ansprüche, dadurch gekennzeichnet, daß die Verschlußklappe (4) auf ihrer zum Dichtsitz (2) weisenden Seite mit einer Dichtung (7) belegt ist.

7. Behälterverschluß nach einem der vorhergehenden Ansprüche, dadurch gekennzeichnet, daß in der Verschlußklappe (4) ein Überdruckventil (8) angeordnet ist.

8. Behälterverschluß nach Anspruch 7, dadurch gekennzeichnet, daß das Überdruckventil (8) einen durch den Mündungsrand einer Zapfpistole betätigbaren Auslösehebel (9) aufweist.

9. Behälterverschluß nach einem der vorhergehenden Ansprüche, dadurch gekennzeichnet, daß der Dichtsitz (2) in Bezug auf die Querschnittsebene des Einfüllstützens (1) geneigt angeordnet ist.

10. Behälterverschluß nach dem Oberbegriff des Patentanspruches 1, dadurch gekennzeichnet, daß eine Sperreinrichtung (10, 11, 12) vorgesehen ist, die das vollständige Öffnen der Klappe (4) bei innenseitigem Überdruck verhindert.

11. Behälterverschluß nach Anspruch 10, dadurch gekennzeichnet, daß die Sperreinrichtung (10, 11, 12) ein druckempfindliches bewegliches Teil (10) aufweist, das mit einer Seite mit der Außenluft und mit seiner entgegengesetzen Seite mit dem Innenraum des Kraftstoffeinfüllstutzens in Verbindung steht, und daß das bewegliche Teil (10) an einen Sperrriegel (11, 12) gekoppelt ist.

12. Behälterverschluß nach Anspruch 11, dadurch gekennzeichnet, daß der Sperrriegel einen Ring (11) aufweist, der den Dichtsitz (2) umschließt und der parallel zur Ebene des Dichtsitzes (2) verschiebbar ist, und daß an dem Ring (11) ein in den Öffnungsweg der Verschlußklappe (4) eingreifender Haken (12) angeordnet ist.
